# EUROPEAN PATENT APPLICATION

(11) **EP 3 805 119 A1**
(43) Date of publication of application: **14.04.2021**
(21) Application number: 19382895.1
(22) Date of filing: 11.10.2019
(51) Int. Cl.: B65D 5/42

(54) **FORMING METHOD OF WOOD OR WOOD FIBRE CONTAINER PREFERABLY FOR HORTICULTURAL USE**

(71) Applicant: Tecnologia y Aplicaciones Laser SLU, 12539 Alquerías N.P. (Castellón) (ES)
(72) Inventor: QUEROL PUIG, Santiago, 12539 Alquerías N.P. (CASTELLÓN) (ES)
(74) Representative: Pons Ariño, Angel

(57) **Abstract**

The object of the invention is a method for forming containers made of wood or wood fibre preferably for use with fruits and vegetables, comprising at least one base (5) and sides (6, 7), which extend with respect to the base (5), with the aid of first folding lines (3, 4). In a first step of the method, folding lines (3, 4) are defined on the laminar preform, whereon rectangular through holes (1) and non-through incisions (2) are die cut. Finally, the container is folded and the final assembly is performed. Likewise, an object of the invention are containers preferably for use with fruits and vegetables, for commercial or industrial use which are able to be obtained by the previous method.

## Description

### OBJECT OF THE INVENTION

The object of the present invention is a method for forming containers made of wood or wood fibre preferably for use with fruits and vegetables, which enables the wood or wood fibre to be folded without breaking.

Likewise, an object of the present invention are containers preferably for use with fruits and vegetables, for commercial or industrial use, which have the advantage of being monomaterial, and which are manufactured by using the aforementioned forming method.

### BACKGROUND OF THE INVENTION

Die cutting is a mechanical operation used to make holes in sheets of metal, plastic, paper or cardboard. To perform this task, different mechanisms can be used, from simple manual actuation mechanisms to sophisticated high-power mechanical presses.

The basic elements of a die cutter are the die, which has the shape and dimensions of the hole to be made, and the cutting matrix, through which the die is inserted when it is forcefully driven by the power provided by the press by means of an eccentric force from the die cutting machine, providing a sharp and forceful blow on the sheet, thus producing a clean cut of the part.

Wood is die cut for different purposes. For example, to trim the outline of a part, to make holes in a surface, or to mark break or folding lines.

Specifically, die cutting on folding lines in both wood and the derivatives thereof, such as high-density wood fibre, is of special interest, particularly for manufacturing containers intended to be used with fruits and vegetables, for commercial or industrial use.

However, making folding lines on these types of materials is problematic, since there are certain technical limitations associated with folding boards that are less than 2 mm thick, because it is very complicated to ensure that the parts located on both sides of the folding line do not come apart when the sheet is folded.

Some alternatives have been proposed to try to facilitate these types of operations, such as the one envisaged in document ES 2027903, which describes a method for folding sheets of wood when manufacturing containers for containing products, in which in a first phase it is attached to the sheet of wood, by means of uniform gluing and pressing, another sheet that is the same or similar in nature, but with the veins thereof perpendicular to those of the first one, cutting out the developed shape of the container, with precise gluing flaps and cutting lines existing in said development, as well as marking the folding lines in order to facilitate manual or automatic assembly.

The method described involves the use of twice the amount of material, since two sheets of wood positioned parallel to each of the containers manufactured using the method must be used.

Moreover, various types of containers are known that are used when transporting and distributing fruits and vegetables.

In general, all these types of containers have the shape of a box open on top, although a certain variety of shapes and features can be found.

As a significant example, document ES 1078781 U discloses a box specially designed for transporting and presenting strawberries, with a bottom, side enclosures, and corner pieces located at the corners defined by where the sides meet, which from now on will be called traditional container.

The corner pieces have the shape of a right-angled prism with a triangular base, which are positioned perpendicular to the bottom, a portion of the corner pieces protruding from the top with respect to the upper edges of the sides. In this case, the corner pieces are solid and made of wood, as are the bottom and side enclosures, which are independent of each other, and are joined by staples, which hold the assembly together.

This type of container, which is the most used, has a number of drawbacks to consider. First, when it is manufactured and assembled, since it is made up of parts with different sizes, weights and even materials, they are difficult to assemble. Furthermore, due to the complexity of the assembly, this type of container is assembled in the factory itself and thus transported to the destination thereof, wherein they will be filled with different products. The transportation of already-assembled containers is inefficient, since they occupy a large volume, and only a small number of them can be transported in each vehicle.

Moreover, since the corner pieces are made of solid wood, the material is not used very efficiently, requiring a high consumption of wood to manufacture each of the containers.

Once the useful life of this type of container has ended, the recycling or recovery thereof is difficult, since they are made of different materials. To be able to recycle them correctly, it would be necessary to remove the staples, which are strongly embedded into the wood, and then separate the bottom and the side enclosures from the corner pieces, since the former is normally made of some type of high-density board and the latter is made of wood.

### DESCRIPTION OF THE INVENTION

The method for forming containers made of wood or wood fibre, object of the present invention, starts with a laminar preform made of wood or wood fibre with a thickness A, whereon some folding lines are defined, whereon a die cut is performed. Thanks to this die cut, the laminar body can be folded along the folding lines.

This method has the advantage that the laminar preform made of wood or wood fibre that is folded can have a minimum thickness of up to 0.8 mm, which had never been achieved until now, due to the technical limitations of folding sheets of wood or wood fibre that are less than 2 mm thick.

The containers able to be obtained with the method have at least one base, larger sides and smaller sides, which extend with respect to the base, with the aid of first folding lines.

Optionally, the containers may comprise extensions which extend from the larger sides and/or smaller sides, or that extend consecutively from other extensions, with the aid in both cases of second folding lines.

In the first step of the method, the folding lines are defined on the laminar preform, which has an outline according to the shape that the container will have.

In this step, the laminar preform is die cut along the folding lines to make rectangular through holes, with width B and height C, distributed uniformly along the folding lines, with a separation distance D.

Then, along the same folding lines, non-through incisions are made, which are uniformly distributed, alternating between the rectangular through holes. These non-through incisions have a length E and a depth F. Thus, in the folding lines, a rectangular through hole alternates with a non-through incision.

This alternating between rectangular through holes and non-through incisions is what enables the folding of the wood or wood fibre with reduced thickness, which had not been achieved until now, preventing the laminar preform from separating or breaking.

Preferably, and depending on the thickness of the laminar preform that is intended to be die cut, which can vary between 0.8 and 4 mm, the rectangular through holes will be 2 to 6 millimetres wide (they will be wider when the laminar preform is thicker), and will be arranged at a distance D comprised between 8 and 22 millimetres.

Moreover, and also preferably, the non-through incisions will penetrate approximately 20% of the thickness A of the laminar preform, leaving the remaining 80% not crossed through. These non-through incisions will preferably be positioned at the intermediate point located between two adjacent rectangular through holes.

In the second step of the method, the larger sides and smaller sides are folded along the first folding lines. If this is the case, the extensions are also folded along the second folding lines. Finally, the container is assembled by joining the larger sides and smaller sides, and optionally the extensions.

In addition to the forming method described, an object of the present invention is a container preferably for use with fruits and vegetables, for commercial or industrial use, able to be obtained by the previous method.

The container comprises a base, larger sides and smaller sides, which extend with respect to the base, with the aid of first folding lines, which comprise rectangular through holes, alternating with non-through incisions.

Additionally, they can comprise extensions that extend from the larger sides and/or smaller sides, or that extend consecutively from other extensions, with the aid in both cases of second folding lines, which comprise rectangular through holes, alternating with non-through incisions.

In one embodiment, one of these extensions may be a cover, which extends with respect to a larger side and/or a smaller side, with the aid of one of the second folding lines. This cover enables the container to be closed, protecting the contents thereof.

At the moment, current and future European and international regulations are completely oriented towards reducing the use of raw materials and maximum optimization of natural resources. The method and container object of the present invention, which is carried out starting from a laminar preform with minimal thickness that had never been achieved until now, is perfectly in line with these regulations, by enabling a smaller amount of wood or derivatives to be used.

In addition to this more efficient use of resources, the containers able to be obtained by the described method have a high strength and they are able to be reused.

Moreover, the containers enable an excellent optimisation in the yield of the wood or wood fibre used, obtaining 80% more containers for each cubic metre of wood used. This also enables the assembly to be performed at the destination, thus being able to transport a much larger number of containers in the same vehicle, since they are disassembled, such that they occupy a much smaller volume.

In this manner, the carbon emissions produced during the transportation of the containers is also able to be minimized. Specifically, the transportation is performed in flat sheets of about 1.2 millimetres, transporting 300% more containers with respect to the disassembled kit for traditional containers, with a very significant reduction in carbon emissions and costs.

Furthermore, since the assembly is simpler than in the case of traditional containers, this can be done with an automatic machine at the end point wherein the container will be used, up to 2000 containers per hour.

Additionally, these types of containers have the advantage that they can be manufactured starting from a single laminar preform made of a single material, meaning that they are monomaterial containers. This adds a new advantage, which is that the reuse, or in this case recycling or recovery of the product, is facilitated as much as possible, once the useful life thereof has ended.

This does not happen in the case of traditional fruit and vegetable containers, which, as indicated in the previous section, is often made up of at least two different materials, even including metal staples to fasten the sides to the base and to each other.

Specifically, by using a single material, sale prices are reduced by 15% compared to containers made of wood with staples.

All this without forgetting that the containers have excellent finishes, which are clean and without splinters, optimally protecting the product being transported.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings which, by way of illustration and not limitation, represent the following:
Figure 1.- Shows a plan view of the folding lines with the rectangular through holes and the non-through incisions.
Figure 2.- Shows a cross section of the folding lines with the rectangular through holes and the non-through incisions.
Figure 3.- Shows a view of a first embodiment of the unfolded container.
Figure 4.- Shows a view of the container of the first embodiment when assembled.
Figure 5.- Shows a view of a second embodiment of the unfolded container.
Figure 6.- Shows a view of the container of the second embodiment when assembled.
Figure 7.- Shows a view of a second embodiment of the unfolded container.
Figure 8.- Shows a view of the container of the second embodiment when assembled.
Figure 9.- Shows a table with the dimensions of the rectangular through holes and the non-through incisions depending on the thickness of the sheet.

### PREFERRED EMBODIMENT OF THE INVENTION

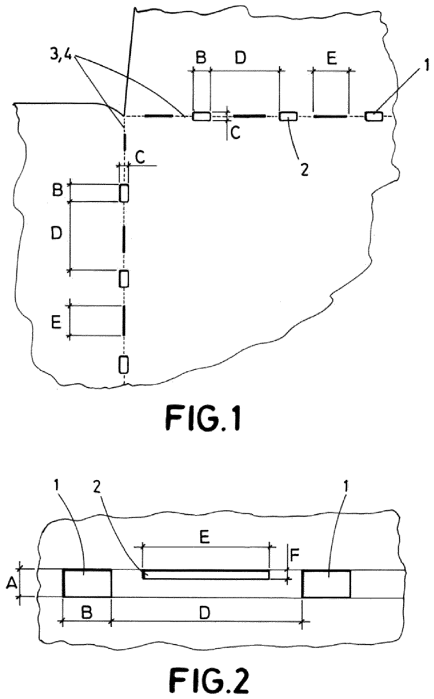

An exemplary embodiment of the present invention is described below with help from Figures 1 to 9.

The method object of the invention starts from a laminar preform made of HDF (high-density fibreboard) with thickness A. Starting from this preform, a container is formed comprising at least one base (5), larger sides (6) and smaller sides (7), which extend with respect to the base (5), with the aid of first folding lines (3), and extensions (10) which extend from the larger sides (6) and/or smaller sides (7), or which extend consecutively from other extensions (10), with the aid in both cases of second folding lines (4).

To do so, the method comprises a first step of defining the folding lines (3, 4) on the laminar preform. In order to define the folding lines (3, 4), rectangular through holes (1) are first die cut along said folding lines (3, 4). Then, non-through incisions (2) are die cut along the folding lines (3, 4), distributed uniformly between the rectangular through holes (1).

The rectangular through holes (1) have a width B and a height C, and are uniformly distributed along the folding lines (3, 4) at a separation distance D therebetween.

The non-through incisions (2) have a length E and a depth F. Thus, in the folding lines (3, 4), a rectangular through hole (1) alternates with a non-through incision (2).

Figure 1 shows how the through holes (1) and the non-through incisions (2) are distributed along the folding lines (3, 4). Figure 2 shows a cross section of a folding line (3, 4) wherein the rectangular through holes (1) and the non-through incisions (2) alternate.

These rectangular through holes (1) and non-through incisions (2) will be what facilitates the folding of the laminar preform made of wood or wood fibre, preventing it from breaking.

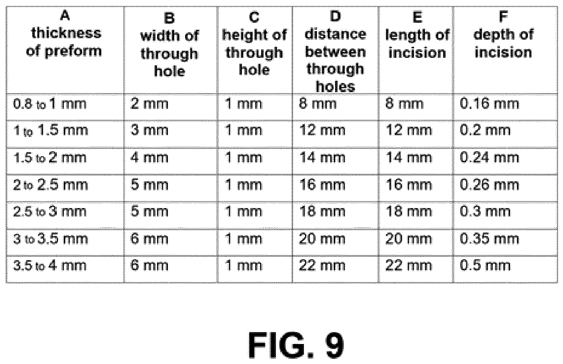

As seen in detail in the table of Figure 9, depending on the thickness A of the laminar preform that is intended to be die cut, which can vary between 0.8 and 4 mm, the rectangular through holes (1) will have a variable width B between 2 and 6 mm (they will be wider when the preform is thicker) and a constant height C of 1 mm. They will be arranged along the folding lines (3, 4) at an intermittent distance D comprised between 8 and 22 millimetres.

Moreover, the non-through incisions (2) will penetrate approximately 20% of the thickness A of the laminar preform, leaving the remaining 80% not crossed through. Figure 9 shows the depth F of the non-through incision (1) depending on thickness A. The non-through incisions (2) will be positioned at the intermediate point located between two adjacent rectangular through holes (1), and will have a length E.

In the second step of the method, the larger sides (6) and the smaller sides (7) are folded with respect to the first folding lines (3), and the extensions (10) with respect to the second folding lines (4). Finally, the container is assembled by joining the larger sides (6), the smaller sides (7) and the extensions (10).

Likewise, an object of the present invention are containers preferably for use with fruits and vegetables, for commercial or industrial use. These containers are made of renewable wood fibre, HDF (high-density) with a density greater than 800 *Kg*/*m*³, with an FSC seal and CARB-2 binders, with thicknesses of 0.8 to 4 millimetres. They are made up of a single part, a laminar preform, and are able to be obtained by the method described above.

Next, three preferred embodiments of the aforementioned containers will be described, said embodiments not being limiting, and there may be countless types of containers able to be obtained by the aforementioned forming method.

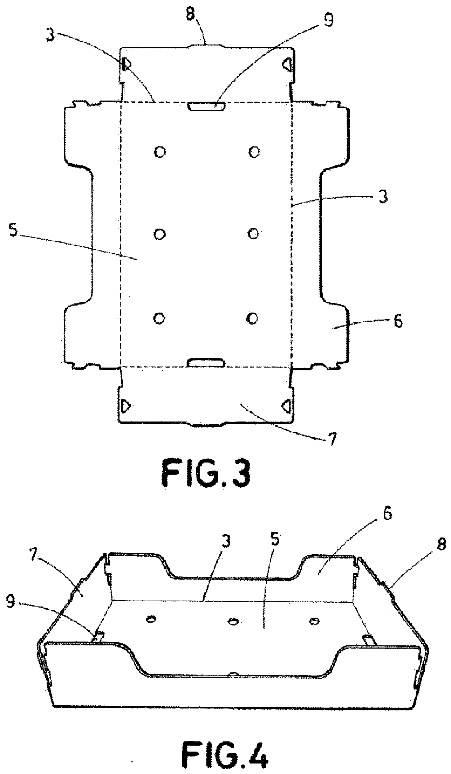

The first embodiment, which is shown disassembled in Figure 3 and assembled in Figure 4, consists of a first container preferably used with fruits and vegetables, for commercial or industrial use which first comprises a base (5), larger sides (6) and smaller sides (7) that extend with respect to the base (5), with the aid of first folding lines (3). This first folding line (3) comprises rectangular through holes (1) and non-through incisions (2).

Both the larger sides (6) and the smaller sides (7) are intended to be folded with respect to the base (5) along the first folding lines (3), being perpendicular to the base (5). In this first embodiment, it is not necessary to use glue to form the container.

Furthermore, the container of the first embodiment has tabs (8) which emerge from the top of the smaller sides (7) and perforations (9) located in the base (5). When one of the containers of this first embodiment is stacked on another identical container, the tabs (8) of the container that is in the lower position are intended to be inserted in the perforations (9) of the container that is in the upper position, keeping the containers together, preventing the stack of containers from falling.

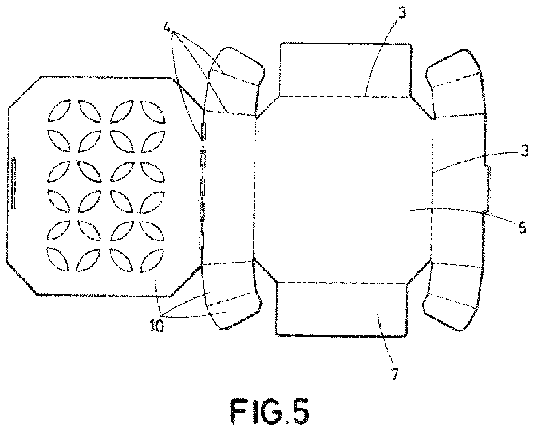

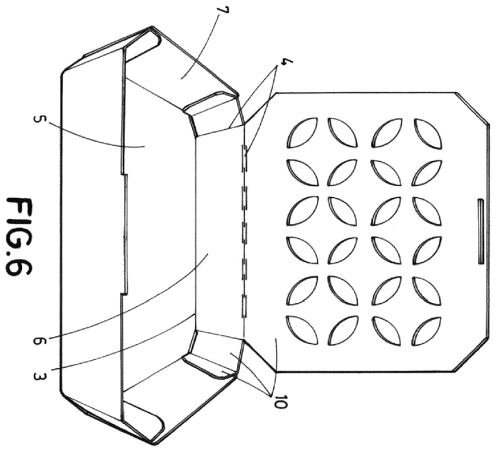

In a second embodiment of the invention, which can be seen disassembled in Figure 5 and assembled in Figure 6, the container preferably used with fruits and vegetables, for commercial or industrial use comprises a base (5), larger sides (6) and smaller sides (7), which emerge from the base, with the aid of first folding lines (3). As in the first embodiment, the larger sides (6) and the smaller sides (7) are folded with respect to the base (5) through the first folding lines (3).

In this second embodiment, the base (5) has straight corners, as shown in Figure 5. Extensions (10) emerge from the larger sides (6). The first of these extensions (10) emerges from the side of the larger side (6), being joined to it through a second folding line (4), and the second extension (10) is joined to the first extension (10) through a second folding line (4).

When assembling the container of this second embodiment, the first extension (10) is positioned in the straight corner of the base (5), and the second extension (10) is intended to be adhered with glue to the corresponding smaller side (7), laterally closing the container.

Furthermore, in this embodiment, the container comprises another extension (10), which extends from the top with respect to a larger side, with the aid of one of the second folding lines (4), intended to cover the top of the container, acting as a cover. This extension (10) can be folded with respect to the larger side (6), opening and closing the container without breaking, protecting the contents thereof.

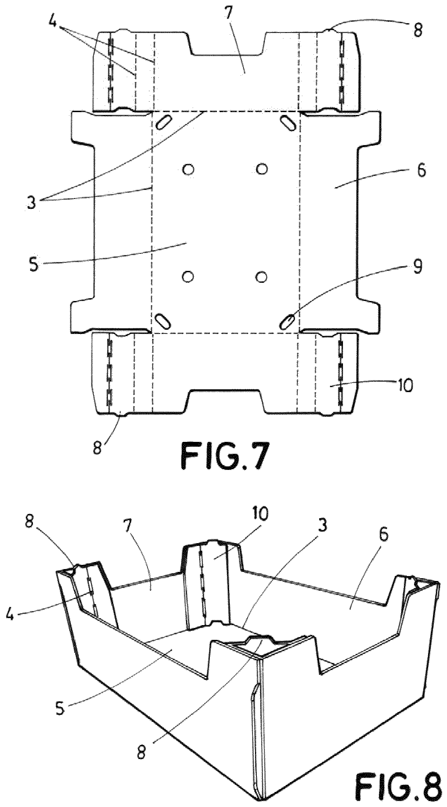

In the third embodiment of the container, which is shown developed in Figure 7 and assembled in Figure 8, the container comprises the base (5), the larger sides (6) and the smaller sides (7), as they have been set forth in the two previous embodiments.

Furthermore, extensions (10) emerge from the smaller sides (7), extensions which are joined to the smaller sides (7) and to each other through the second folding lines (4). In this case, the container comprises three extensions (10) which are intended to be folded forming a prism with a triangular base, which is positioned in each of the four corners of the base (5). One of the extensions (10) is in contact with the larger side (6) and the other is in contact with the smaller side (7), sticking to these by means of applying glue.

Finally, the extension (10) located in the central position comprises a tab (8) which emerges from the top thereof. In this embodiment, the base (5) comprises perforations (9) in the corners of the base (5). When stacking containers on top of each other, the tabs (8) of the container located on the bottom are intended to be inserted into the perforations (9) of the container located on top, keeping the containers fastened with respect to each other and preventing them from falling.

An advantage offered by this third embodiment is that, especially thanks to the arrangement of the extensions (10), a container is created that is highly resistant to compression exerted by loading the filled containers and which enables the containers to be stacked up to a height greater than 2.40 m, completely guaranteed to safely arrive at the destination.

In order to exemplify with real values the aforementioned saving in resources, especially wood, caused by using this type of container, some information is presented below.

For example, the manufacture of a container with dimensions of 235 × 195 × 65 mm is proposed. First, if the container made of traditional wood is formed, with wooden corner pieces and joined together by means of staples, 3333 *units*/*m*³ can be produced. On the other hand, if containers with boards made of renewable wood fibre starting from 1.2 mm are used, which are able to be obtained by the forming method object of the invention, 6006 *units*/*m*³ can be obtained. The difference is 80% more units per cubic metre.

## Claims

1. A forming method of wood or wood fibre container preferably for horticultural use, starting from a laminar preform, comprising at least:
- a base (5),
- larger sides (6) and smaller sides (7), which extend with respect to the base (5), with the aid of first folding lines (3), and optionally
- extensions (10) which extend from the larger sides (6) and/or smaller sides (7), or which extend consecutively from other extensions (10), with the aid in both cases of second folding lines (4), and
which comprises the steps of:
- defining the folding lines (3, 4),
- folding of the larger sides (6) and smaller sides (7) with respect to the first folding lines (3), and optionally folding the extensions (10) with respect to the second folding lines (4),
- assembling the container by joining the larger sides (6) and the smaller sides (7) and optionally the extensions (10),
**characterised in that** defining the folding lines (3, 4) comprises the steps of:
- die cutting rectangular through holes (1) along the folding lines (3, 4),
- die cutting non-through incisions (2) along the folding lines (3, 4), distributed uniformly between the rectangular through holes (1).

2. A container preferably for horticultural, commercial or industrial use, able to be obtained by the method described in claim 1, **characterised in that** it comprises at least:
- a base (5), and
- larger sides (6) and smaller sides (7), which extend with respect to the base (5), with the aid of first folding lines (3), comprising rectangular through holes (1) alternating with non-through incisions (2).

3. A container preferably for horticultural, commercial or industrial use, able to be obtained by the method described in claim 1, **characterised in that** it comprises at least:
- a base (5),
- larger sides (6) and smaller sides (7), which extend with respect to the base (5), with the aid of first folding lines (3), comprising alternating through holes (1) alternating with non-through incisions (2), and
- extensions (10) that extend from the larger sides (6) and/or smaller sides (7), or that extend consecutively from other extensions (10), with the aid in both cases of second folding lines (4), comprising rectangular through holes (1), alternating with non-through incisions (2).

4. The container of claims 2 or 3, further comprising tabs (8) which emerge from the smaller sides (7) and/or the larger sides (6), and perforations (9) in the base (5), the tabs (8) being intended to be inserted into the perforations (9) of a second container positioned on the container, keeping one fastened on top of the other.

5. The container of claim 3, wherein one of the extensions (10) extends from the top from a larger side (6) or from a smaller side (7), with the aid of the second folding lines (4), comprising rectangular through holes (1) alternating with non-through incisions (2), the extension (10) being intended to cover the top of the container.
